# EUROPEAN PATENT APPLICATION

(11) **EP 3 223 068 A1**
(43) Date of publication of application: **27.09.2017**
(21) Application number: 16305334.1
(22) Date of filing: 23.03.2016
(51) Int. Cl.: G02C 11/00, G06Q 30/00, G09F 3/00

(54) **METHOD OF MANAGING PERSONALIZATION DATA RELATED TO SPECTACLES OR TO A WEARER THEREOF**

(71) Applicant: Essilor International, 94220 Charenton Le Pont (FR)
(72) Inventor: CALLIER, Benoit, 94227 CHARENTON LE PONT CEDEX (FR); HUBACZ, Dominick, 94227 CHARENTON LE PONT CEDEX (FR); BRUGUES, Gaelle, 94227 CHARENTON LE PONT CEDEX (FR)
(74) Representative: Cabinet Plasseraud

(57) **Abstract**

A method of managing personalization data (PD) related to a wearer (WEA) of spectacles (SP) and/or to said spectacles (SP), said spectacles (SP) comprising a frame (FR) and spectacles lenses (LEN) carried by said frame.

The method comprises:
- storing at least part of said personalization data (PD) in a data support (DS) for subsequent retrieval,
- adding the data support (DS) to said spectacles (SP) or to an item (IT) associated to said spectacles to be carried by said wearer along with said spectacles (SP).

## Description

The invention pertains to the field of spectacles and more particularly to data which are related to spectacles or to their wearer.

In the past few years, the overall quantity of data which relate to spectacles, to their properties and to medical information regarding the wearer has gradually increased.

These data for instance pertain to the medical history of the wearer, to morphological features of the latter or to properties of spectacles he or she uses to correct his or her vision.

These data are distributed between several actors, for instance ophthalmologists, opticians, spectacle manufacturers, and the wearer himself.

This distributed configuration translates into the access to these data being uneasy at best, if not impossible at times.

Yet these data might be required in some situations, for instance when a person wishes to purchase new spectacles.

The invention seeks to solve this problem.

To that end, the invention relates to a method of managing personalization data related to a wearer of spectacles and/or to said spectacles, said spectacles comprising a frame and spectacles lenses carried by said frame, wherein said method comprises:
- storing at least part of said personalization data in a data support for subsequent retrieval,
- adding the data support to said spectacles or to an item associated to said spectacles to be carried by said wearer along with said spectacles.

According to an aspect of the invention, the data support is added to the spectacle frame.

According to an aspect of the invention, the data support is added to said item associated to the spectacles, said item being a spectacle case or a spectacle cloth.

According to an aspect of the invention, the personalization data comprise first data stored in a database, said first data comprising an identifier for identifying said first data, said at least part of said personalization data stored in the data support comprising a value of said identifier for retrieving the first data using said value of the identifier.

According to an aspect of the invention, the data support is added to the spectacles or to said item prior to storing the at least part of said personalization data in the data support.

According to an aspect of the invention, the data support is added to the spectacles or to said item after storing the at least part of said personalization data in the data support.

According to an aspect of the invention, the data support comprises a data storage component defining a graphic pattern representative of said at least part of said personalization data stored in the data support.

According to an aspect of the invention, the graphic pattern is in the form of a barcode.

According to an aspect of the invention, the data support comprises a wireless communication device.

According to an aspect of the invention, adding the data support to said spectacles or to the item associated to said spectacles comprises removably attaching the data support to said spectacles or to said item.

According to an aspect of the invention, the personalization data comprises one or more of: medical data representative of a medical history of the wearer, contact data for contacting the wearer, morphology data representative of morphological features of the wearer's head, visual data representative of a visual behavior of the wearer, and equipment data representative of properties of the lenses of the spectacles of the wearer.

According to an aspect of the invention, the method further comprises accessing the personalization data, and accessing the personalization data is carried out using at least one of a plurality of access levels to each of which are associated corresponding personalization data access rights.
The invention also relates to spectacles comprising a spectacle frame and lenses carried by said frame, said spectacle frame being destined for the implementation of the method as defined above, said spectacles comprising a data support for storing at least part of personalization data related to a wearer of said spectacles and/or to said spectacles.

The invention further relates to an item associated to spectacles belonging to a wearer, said item being destined to be carried by said a wearer along with said spectacles, said item comprising a data support for storing at least part of personalization data related to a wearer of said spectacles and/or to said spectacles.

Further features and advantages of the invention will become more apparent by reading the following detailed description of the embodiments, which are given by way of non-limiting examples with reference to the appended drawings, in which:
- Figure 1 illustrates an apparatus for implementing the method according to the invention;
- Figure 2 illustrates personalization data managed during the method according to the invention;
- Figure 3a and 3b illustrate different embodiments of an item according to the invention;
- Figures 4a, 4b and 4c illustrate different embodiments of a data support;
- Figure 5 illustrates an alternative embodiment of the apparatus of Figure 1;
- Figure 6 illustrates the steps of a method according to the invention.

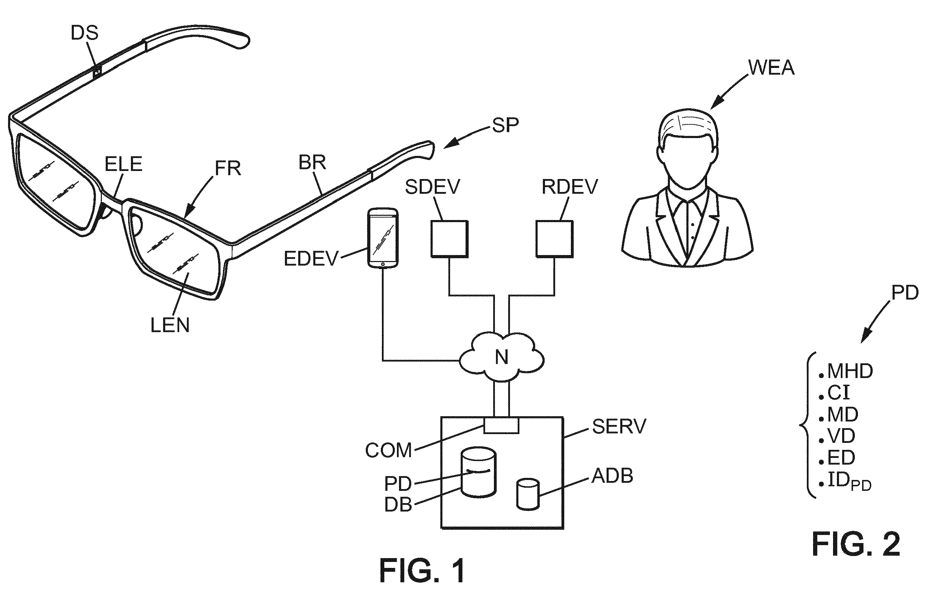

Figure 1 illustrates an apparatus for implementing the method of managing personalization data according to the invention.

The apparatus comprises spectacles SP according to the invention, which belong to a wearer WEA. The spectacles SP comprise a spectacle frame FR, or frame FR, and lenses LEN received in the frame FR.

The frame FR comprises side branches BR and a main frame element ELE. The main frame element ELE comprises regions destined to cooperate with the lenses for securing the lenses to the frame. These regions may be in the form of holes having dimensions complementary of that of the lenses which each receive one of the lenses LEN. For instance, the main frame element ELE comprises two such holes.

Alternatively, these regions may have any known form, and may be configured for the securing of the lenses to the frame without holes. For instance, the frames are thus rimless frames.

The lenses LEN are for instance configured to correct the sight of the wearer WEA. Alternatively, they may solely be solar spectacles configured to protect the wearer's eye from the sun.

In the context of the invention, the spectacles SP further comprise a data support DS.

The data support SP is configured to store all or part of personalization data PD.

The personalization data PD, or data PD, are related to the wearer WEA and/or to the spectacles SP.

More precisely, the data PD are adapted to specify at least one medical-related information regarding of the wearer and/or the spectacles.

Advantageously, the data PD are more specifically adapted to specify at least one eye-related medical information regarding the wearer and/or the spectacles.

For instance, in reference to Figure 2, the data PD comprise at least one of the following:
- medical data MHD representative of a medical history of the wearer,
- contact data CD for contacting the wearer,
- morphology data MD representative of morphological features of the wearer's head,
- visual data VD representative of a visual behavior of the wearer, and
- equipment data ED representative at least of properties of the lenses of the spectacles of the wearer.

It should be noted that these data MHD, CD, MD, VD and ED optionally contain a plurality of versions of the corresponding data, each version corresponding to a given point in time. In other words, advantageously, the data are not deleted when the data are updated, the new data being merely added to the existing data, so that each category of data comprises a history of the corresponding data.

For instance, the medical data MHD comprise one or more of the following:
- history data indicative of a history of ailments the wearer has suffered from, such as eye-related ailments,
- prescription data indicative of medical prescriptions received by the wearer,
- correction history data indicative of a history of the corrections provided to the wearer by previous spectacles, and
- insurance data indicative of the medical insurance coverage of the wearer.

For instance, the contact data CD comprise at least one of the following:
- personal data regarding the wearer, including his or her name, age, preference data indicative of a personal interest or hobby of the wearer,
- contact information for effectively contacting the wearer or a person designated to that end, including a physical address, an email address or a phone number.

For instance, the morphology data MD include one or more of the following:
- Inter-Pupilary distance data indicative of a distance between the pupils of the wearer,
- Nose data indicative of a position, a size and/or a shape of the nose of the wearer,
- Ear data indicative of a position, a size and/or a shape of the ears of the wearer,
- Face mapping data indicative of a three-dimensional representation of the wearer's face, and
- Head mapping data indicative of a three-dimensional representation of the wearer's head. The head mapping data may further comprise spectacles related head mapping data, such as an eye-lens distance, a pentoscopic angle and/or a curve angle.

For instance, the visual data VD comprise one or more of the following:
- Ametropia data indicative of myopia or hypermetropia measurements regarding the vision of the wearer,
- Presbyopia data indicative of Presbyopia measurements regarding the vision of the wearer, and
- Astigmatism data indicative of astigmatism measurements regarding the vision of the wearer, and
- Eye-Head ratio data indicative of the visual behavior of the wearer.

For instance, the equipment data comprise one or more of the following:
- Lens data indicative of at least one property of the lenses LEN of the spectacles SP among: a shade property, a color property, a tint property, a sun protection property, color graduation property, a photochromic property, a lens material or index, a lens brand, a lens optical design, lens options properties and lens customization properties, and
- Coating data indicative of at least one property of a coating applied to the lenses LEN selected among: a transparency property, an anti-scratch property, an anti-static property, a water-repellence property, a smudge resistance property,

Optionally, the equipment data may comprise frame data indicative of at least one property of the frame FR among a shape property, a color property, a material property, a brand property.

In some embodiments, the data PD may further comprise spectacle preference data indicative preferences of the wearer regarding spectacles in general. For instance, these data include frame preference data indicative of a preference of the wearer regarding spectacles frames, such as frame brand, frame material, frame shape. In addition, they may include additionally or alternatively lens preference data indicative of a preference of the wearer regarding spectacles lenses, such as lens shape, lens color, lens tint, lens sun protection, lens shade.

In the embodiment of Figure 1, the data support DS form part of the spectacles SP. For example, it is included in the branches BR of the frame FR. For instance, it is located on an inner face of one of the branches BR.

Alternatively, it may be included in the main frame element ELE. For instance, it is then located on an inner face of the element ELE.

In alternative embodiments, as will be described more in details below, the data support DS is not located on a face of the frame FR. Instead, it is imbedded in the matter of the frame. It may be imbedded in one of the branches. Alternatively, it is imbedded in the main frame element ELEM.

The apparatus further comprises a server SERV including a database DB which comprises all or part of the personalization data PD.

The apparatus further comprises a retrieval device RDEV adapted for retrieving the data PD stored in the data support DS. The retrieval device is adapted to communicate with the server SERV via a network N using a communication interface COM of the server SERV.

The apparatus further comprises an electronic device EDEV adapted for communicating with the server SERV to retrieve the personalization data PD stored in the database DB and to send new personalization data PD to the server SERV.

The electronic device EDEV may take any known form, and may comprises a personal computer, or an electronic phone device, such as a smartphone or the like.

Optionally, the apparatus further comprises a device SDEV adapted for sending data to the data support DS. The device SDEV is thus adapted to send to the data support DS the personalization data which are to be stored in the data support DS.

As will be made more apparent below, the device SDEV is advantageously present when the data support DS comprises a wireless communication device.

It should be noted that the devices RDEV, EDEV and SDEV may not be distinct. For instance, they all correspond to a same device, or two of these devices are combined together to form a single device.

Advantageously, the electronic device EDEV and the retrieval device RDEV are a same device, such as a smartphone or the like.

In embodiments in which the devices RDEV, EDEV and SDEV are separate devices, they are advantageously adapted to communicate with one another.

In the embodiment of Figure 1, the data support DS forms part of the spectacles SP. In an alternative embodiment, the data support DS is not located in or on the spectacles. Instead, it forms part of an item IT associated with the spectacles SP.

For instance, the item IT in question is an item IT that is intended to be carried around by the wearer WEA along with the spectacles.

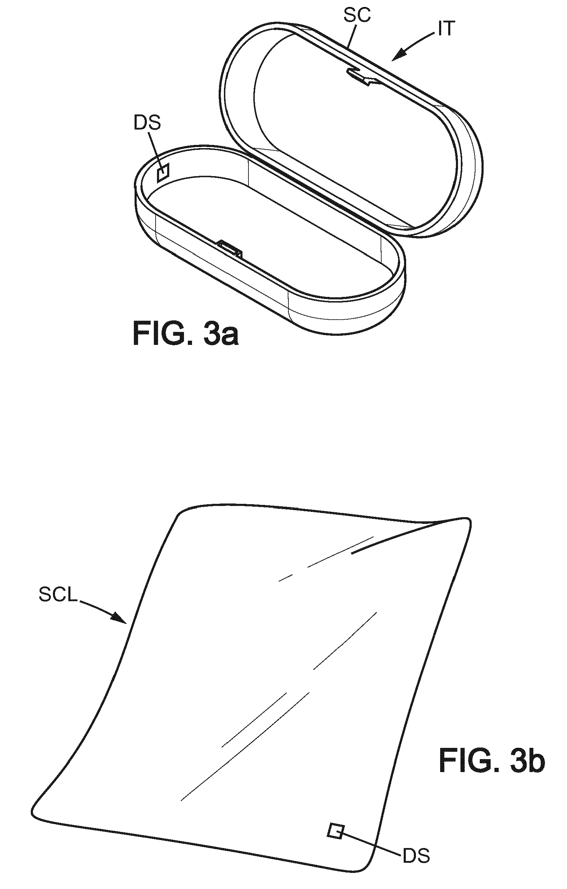

In reference to Figure 3a, the item IT is for instance a spectacle case SC adapted for storing the spectacles when they are not worn by the wearer.

As in the embodiment of Figure 1, the data support DS may be located on a face of the case SC, such as an inner face of the case. Alternatively, it may be imbedded in the matter of the case SC.

In the alternative embodiment of Figure 3b, the item IT is a spectacle cloth SCL adapted for cleaning the spectacles, in particular the lenses LEN. For instance, the cloth SCL is a microfiber cloth or the like.

The data support DS may be located on a face of the cloth SCL. Alternatively, it is imbedded in the fabric of the cloth.

Furthermore, various embodiments for the data support DS itself are envisaged.

In a first embodiment, the data support DS is configured to store all or part of the personalization data PD in a graphically encoded form.

To that end, the data support DS comprises a data storage component DSC in which all or part the data PD included in the data support are encoded graphically.

In other words, the data storage component DSC is configured to store data in an encoded form which defines a graphic pattern representative of the data PD it contains.

For instance, the graphic pattern is in the form of a barcode.

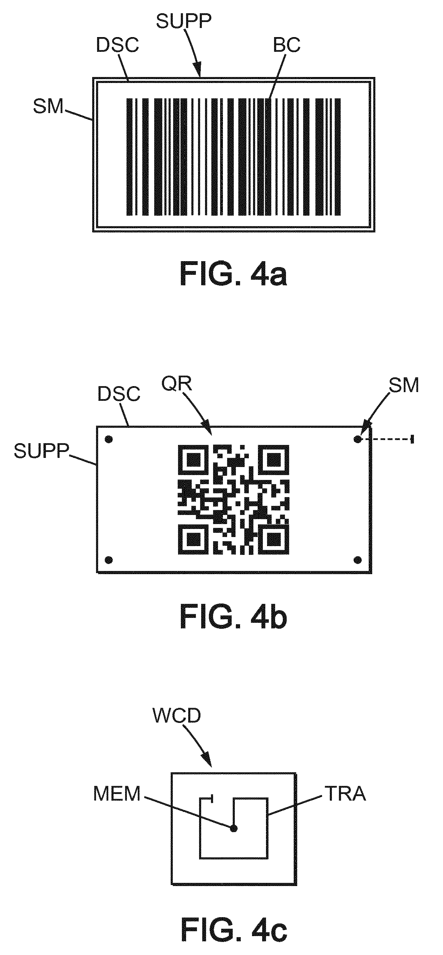

In reference to Figure 4a, the graphic pattern corresponds to a barcode comprising parallels bars having one of a plurality of widths each corresponding to a given number, the sequence of bars thus defining a pattern which represents a sequence of numbers encoding the data.

In reference to Figure 4b, the graphic pattern corresponds to a barcode comprising rows and columns of shapes such as squares.. Each shape has one of a plurality of colors or shades, thereby defining a matrix of shapes encoding the data PD through the color or shade of the various shapes of the matrix. For instance, the graphic pattern then corresponds to a QR code or the like.

In further embodiments, the graphic pattern comprises rows and columns of shapes which comprises, in addition to a given shade or color, a given depth among a plurality of possible depth values. The combination of depth and color or shade of the shapes encodes the data PD.

In further embodiments, the data support DS may comprise a plurality of data storage components DSC defining respective graphic patterns which each encode part of the data PD the data support DS contains. For instance, the data support may comprise any combination of barcodes such as those above.

In reference to Figure 4c, in an alternative embodiment, the data support DS is adapted for wireless communications with an external device.

To that end, the data support DS comprises a wireless communication device WCD.

The wireless communication device WCD comprises a memory component MEM for storing all of part of the data PD the data support DS contains, and a transmitter TRA for remotely sending the data to the external device and remotely receiving data from the external device.

For instance, the wireless communication device is a radio communication device.

For instance, as illustrated in Figure 4c, the wireless communication device WCD includes a passive RFID-tag (for Radio-frequency identification), in which the transmitter TRA comprises an antenna destined to be remotely inductively powered by the external device.

Alternatively, the wireless communication device WCD comprises an NFC-tag, for Near-Field Communication, or a Bluetooth device.

In a given embodiment, all the personalization data PD are located in the data support DS. In other words, the data support DS contains all the data PD. Advantageously, the database DB of the server SERV then comprises a copy of the personalization data PD stored in the data support.

However, alternatively, the data support DS only comprises part of the personalization data PD.

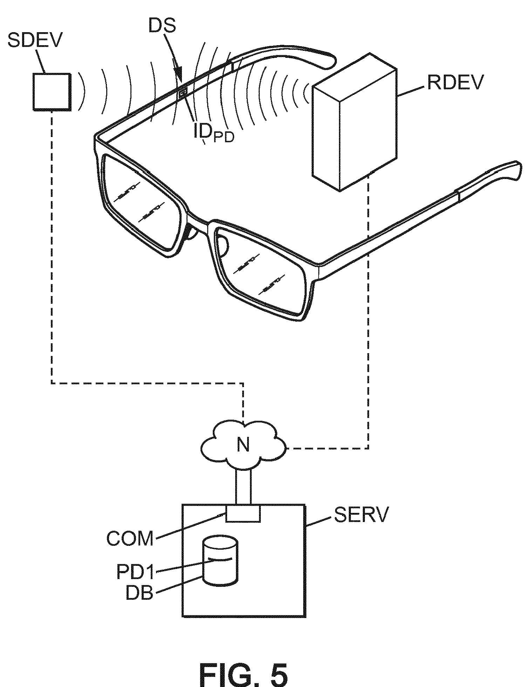

In these embodiments, in reference to Figure 5, the personalization data PD comprise first data PD1 stored in the database DB of the server SERV.

In addition to the data described above, the first data PD1 comprise an identifier ID_{PD} for identifying the first data. The identifier is adapted for allowing retrieval of the first data PD1 contained in the database DB.

The identifier ID_{PD}, or a value of the latter, is contained in the data support DS.

A method of managing the personalization data will now be described in reference to the Figures for a configuration in which the data support DS forms part of the spectacles SP.

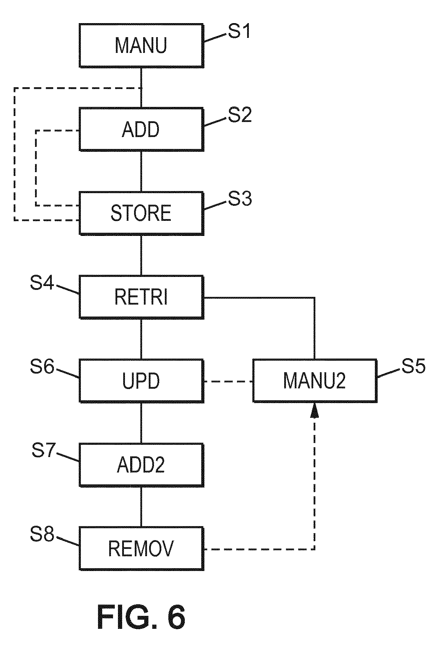

In reference to Figure 6, during a first step S1, the spectacles SP are manufactured.

To that end, the frame FR is manufactured, and the lenses LEN are manufactured.

Any known technique may be used to that end.

The lenses LEN and the frame FR are then assembled to form the spectacles SP.

During a step S2, the data support DS is added to the spectacles SP.

Advantageously, the data support DS is added to the spectacles SP so as to be removable from the latter.

Alternatively, the data support DS is added to the spectacles SP in a definitive manner. In this case, the data support DS is not adapted to be removable.

The details of this operation depend of the configuration of the data support DS and on whether it is removable or not.

In embodiments in which the data support DS is removable, the data support DS advantageously comprises a releasable securing mechanism SM adapted to secure the data support DS to the spectacles SP in a removable manner.

In reference to Figure 4a, the securing mechanism SM comprises a face of the support DS provided with adhesive properties. This face is for instance the back face of a support of the data support DS. In other words, in this embodiment, the data support DS comprises a support SUPP, the latter being in the form of a sticker.

Alternatively, in reference to Figure 4b, the securing mechanism SM may include holes arranged in the support SUPP of the data support DS and screws of complementary shape destined to be secured to the frame of the spectacle SP. The support SUPP may then correspond to a plate provided with said holes.

Alternatively, in embodiments in which the data support DS is not removable, the data support is added to the spectacles so as become integral with the spectacles.

For instance, in embodiments in which the data support DS comprises a data storage component DSC defining a graphic pattern, the graphic pattern in question is formed directly onto the spectacles without a medium as a sticker support as in Figure 4a.

To that end, any know technique may be used, such as laser engraving, mechanical engraving, inkjet printing, 3D embossed printing, or permanent tag marking.

Preferably, the data support SD is then added to the frame FR, rather than to the lenses LEN.

In embodiments in which the data support DS comprises a wireless communication device WCD and is not added to the spectacles in a removable manner, the wireless communication device WCD is preferably embedded in the matter of the spectacles, preferably the frame FR, during step S1.

In a general manner, step S2 may occur during step S1, regardless of the exact configuration of the data support and regardless of whether it is removable from the spectacles or not.

In other words, in some embodiments, the data support DS is added to the spectacles SP while the spectacles are being built. For instance, the data support DS is imbedded in the matter of the frame FR while the frame FR is being built.

Alternatively, the data support DS is added to the spectacles DS after step S1, i.e. after the spectacles have been built.

In a step S3, the personalization data PD are stored in the data support DS.

The details of this operation depend on the configuration of the data support DS.

For a data support DS which comprises a data storage component DSC defining a graphic pattern, this operation is carried out by forming the graphic pattern of the data storage component.

In cases in which the data support DS comprising the data storage component DSC is non removable from the spectacles, this step occurs during step S2 in which the data support is added to the spectacles SP.

In cases in which the data support DS comprising the data storage component DSC is removable from the spectacles, storing the data PD in the data support DS may take the form of forming the graphic pattern on the support SUPP of the data support DS.

Advantageously, this step S3 is performed before adding the data support DS to the spectacles SP, i.e. before step S2. Alternatively, it is performed after.

In embodiments in which the data support DS comprises a wireless communication device WCD, storing the personalization data PD onto the data support DS comprises employing the device SDEV to remotely send the personalization data PD to the data support DS.

For instance, in reference to Figure 6, for a RFID- tag, an NFC tag or a Bluetooth device, after having been brought the device SDEV close to the data support SUPP, the device SDEV sends the data PD to the data support DS in the form of electromagnetic waves which are received by the transmitter and converted into the personalization data PD for storage by the memory component MEM.

To that end, the device SDEV communicates with the server SERV, which contains the personalization data PD. The device SDEV retrieves the personalization data PD to be sent to the data support DS, and generates electromagnetic waves which represent the personalization data PD destined to be stored by the data support DS.

For instance, this operation is carried out after the data support DS has been added to the spectacles SP. In other words, step S3 occurs after step S2.

Alternatively, this operation is carried out before the data support DS is added to the spectacles SP.

In embodiments in which the data support DS only comprises part of the personalization data PD, at least the identifier ID_{PD} of the first data PD1 contained in the databased DB is then stored in the data support DS.

During a step S4, the personalization data PD stored in the data support DS are accessed, or retrieved, using the retrieval device RDEV.

In embodiments in which the data support DS comprises a data storage component defining a graphic pattern, the retrieval device RDEV is adapted to capture the graphic pattern and process the graphic pattern to obtain the personalization data PD.

For instance, for a graphic pattern corresponding to a barcode, the retrieval device RDEV captures an image of the graphic pattern and processes the captured image to obtain the data PD. For a graphic pattern corresponding to a classical barcode as opposed to a QR code, the retrieval device RDEV may comprise an optical scanning function known in the art.

In embodiments in which the data support DS comprises a wireless communication device WCD, the retrieval device RDEV is adapted to remotely send an electromagnetic signal to the device WCD, which causes the device WCD to transmit the personal data to the retrieval device RDEV.

Once retrieved by the retrieval device RDEV, the personalization data PD are for instance sent to the electronic device EDEV.

In embodiments in which the data support DS only comprises part of the personalization data PD, the retrieved data comprise the identifier ID_{PD} (or its value). The device RDEV proceeds to send the identifier ID_{PD} to the server SERV. In response to receiving the identifier, the server SERV retrieves the data PD1 associated to the identifier, and sends them to the electronic device EDEV.

Once the electronic device DEV has received the personalization data PD, the data PD are optionally displayed on a display of the electronic device EDEV for consultation by a user such as an optician or an ophthalmologist.

Advantageously, during step S4, the access to the personalization data PD is carried out using one of a plurality of access levels to each of which are associated corresponding access rights.

The access rights of a given access level define whether a user having the corresponding access level may access all or only part of the personalization data. Additionally, it defines whether the user may only read the personalization data, or may also write personalization data PD in the data support DS.

To that end, the server SERV contains an access rights database ADB which contains, for each user that may access the personalization data, associated access level data and corresponding access rights data.

For instance, the access levels comprise a first level whose access rights allow the corresponding users to access only part of the personalization data, a second level whose access rights allow the corresponding users to access all of the personalization data, and a third level whose access rights allows the corresponding users to access all the data and write data in the data support DS.

In an optional step S5, at least one action other than displaying the data PD is performed as a function of the retrieved data PD.

For instance, new spectacles are built on the basis of the retrieved data PD.

To that end, for instance, the electronic device EDEV sends the retrieved data PD to a distant manufacturing apparatus configured to process the personalization data and to manufacture all or part of the new spectacles on the basis of the latter.

For instance, the personalization data are then used to manufacture a frame of the new spectacles, and/or lenses for the new spectacles.

During a step S6, the data contained in the database DB of the server SERV are updated.

For instance, to that end, new personalization data are inputted using the electronic device EDEV and are sent to the server SERV. The server SERV then proceeds to update the content of the database DB on the basis of these new data.

Preferably, when the database contains the data PD1, the identifier ID_{PD} is left unchanged. In addition, as described above, the previous data which the new data are destined to update are advantageously not deleted.

During an optional step S7, the personalization data PD comprised in the data support DS are updated to reflect the changes made to the data contained in the database DB during step S6.

Advantageously, this step is carried out when the data support DS comprises a wireless communication device WCD whose content may be easily modified, as opposed to configurations in which the data support DS comprises a data storage component DSC whose graphic pattern may not easily be modified.

Advantageously, this step is not performed when the data support does not contain all of the personalization data PD, particularly if the data support DS only contains the identifier ID_{PD} of the first data PD1 stored in the database DB.

In a step S8, the data support DS is removed from the spectacles SP.

Advantageously, this step is performed when the data support DS is designed to be removable.

Once it has been removed, the data support DS may be discarded if it is no longer needed. Alternatively, it may be added to new spectacles. These new spectacles optionally correspond to the new spectacles which have been built during step S5 on the basis of the data retrieved during step S4.

To that end, as in step S2, the data support DS is secured to the new spectacles using its securing mechanism SM.

The above method has been described for a data support DS which is added to the spectacles.

However, alternatively, the data support is added to the item IT associated with the spectacles, such as the spectacle case of Figure 3a, or the spectacle cloth of Figure 3b. The modifications implied for the steps described above may be immediately derived from the description above.

The invention presents numerous advantages.

First of all, it contributes to greatly simplifying the access to the data the personalization data may include, as they are all gathered.

This benefits the wearer, who can now easily access information regarding his optical equipment and visual health. The need to carry around prescriptions, insurance documents, or re-do measurements prior to ordering new spectacles is reduced.

It also benefits opticians, who can easily access detailed information they might need regarding the wearer or his equipment.

They can more easily adapt to the wearer's needs or preferences, and propose adapted products in a more efficient manner.

Moreover, retrieving lost glasses is made easier in case the support data DS contains contact data for contacting the wearer.

Spectacles manufacturers, such as lens manufacturers, also benefit from the invention as they can retrieve the personalization data to enhance a client database or the like, and to further personalize their relationship with their customer, for instance by providing information about new products as a function of the personalization data.

Moreover, access to the personalization data is further simplified as they are attached to a piece of equipment that glass-wearers carry around with them, in the form of their spectacles or in the form of a specific item carried along the spectacles.

Access to these data no longer constitutes a limiting factor, for instance in cases one may need to replace his spectacles by new ones.

Moreover, the envisaged data support configurations are easily implemented and do not substantially increase the costs incurred by their presence on the spectacles or the item associated to the spectacle

## Claims

1. A method of managing personalization data (PD) related to a wearer (WEA) of spectacles (SP) and/or to said spectacles (SP), said spectacles (SP) comprising a frame (FR) and spectacles lenses (LEN) carried by said frame, wherein said method comprises:
- storing (S3) at least part of said personalization data (PD) in a data support (DS) for subsequent retrieval,
- adding (S2) the data support (DS) to said spectacles (SP) or to an item (IT) associated to said spectacles to be carried by said wearer along with said spectacles (SP).

2. The method according to claim 1, wherein the data support (DS) is added to the spectacle frame (FR).

3. The method according to claim 1, wherein the data support (DS) is added to said item (IT) associated to the spectacles, said item being a spectacle case (SC) or a spectacle cloth (SCL).

4. The method according to any one of the preceding claims, wherein the personalization data (PD) comprise first data (PD1) stored in a database (DB), said first data comprising an identifier (ID_{PD}) for identifying said first data (PD1), said at least part of said personalization data stored in the data support comprising a value of said identifier for retrieving the first data using said value of the identifier.

5. The method according to any one of the preceding claims, wherein the data support (DS) is added to the spectacles (SP) or to said item (IT) prior to storing the at least part of said personalization data in the data support.

6. The method according to any one of claims 1 to 4, wherein the data support (DS) is added to the spectacles or to said item after storing the at least part of said personalization data (PD) in the data support.

7. The method according to any one of the preceding claims, wherein the data support comprises a data storage component (DSC) defining a graphic pattern representative of said at least part of said personalization data stored in the data support (DS).

8. The method according to claim 7, wherein the graphic pattern is in the form of a barcode.

9. A method according to any one of claims 1 to 6, wherein the data support comprises a wireless communication device (WCD).

10. The method according to any one of the preceding claims, wherein adding the data support to said spectacles or to the item associated to said spectacles comprises removably attaching the data support to said spectacles or to said item.

11. A method according to any one of the preceding claims, wherein the personalization data comprises one or more of: medical data (MHD) representative of a medical history of the wearer, contact data (CD) for contacting the wearer, morphology data representative of morphological features of the wearer's head, visual data (VD) representative of a visual behavior of the wearer, and equipment data (ED) representative of properties of the lenses of the spectacles of the wearer.

12. A method according to any one of the preceding claims, wherein the method further comprises accessing (S4) the personalization data (PD), and wherein accessing the personalization data is carried out using at least one of a plurality of access levels to each of which are associated corresponding personalization data access rights.

13. Spectacles comprising a spectacle frame and lenses carried by said frame, said spectacle frame being destined for the implementation of the method according to any one of the preceding claims, said spectacles comprising a data support (DS) for storing at least part of personalization data related to a wearer of said spectacles and/or to said spectacles.

14. An item associated to spectacles belonging to a wearer, said item being destined to be carried by said a wearer along with said spectacles, said item comprising a data support for storing at least part of personalization data related to a wearer of said spectacles and/or to said spectacles.
